# EUROPEAN PATENT APPLICATION

(11) **EP 4 468 770 A1**
(43) Date of publication of application: **27.11.2024**
(21) Application number: 22920573.7
(22) Date of filing: 20.12.2022
(51) Int. Cl.: H04W 16/28, H04W 72/0446

(54) **TERMINAL, RADIO COMMUNICATION METHOD, AND BASE STATION**

(30) Priority: 17.01.2022 JP 2022004894
(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2022/046898
(87) International publication number: WO 2023/136055

(57) **Abstract**

To appropriately perform communication even when a plurality of DL transmissions/UL transmissions are scheduled by one or more TRPs. A terminal according to an aspect of the present disclosure includes: a receiving section that receives downlink first information indicating scheduling of a plurality of physical shared channel transmissions and second information indicating a unified transmission configuration indicator (TCI); and a control section that performs, in a case that an update timing for a unified TCI state indicated by the second information is configured to be in a middle of a time period during when the plurality of physical shared channel transmissions are to be performed, control to apply a certain TCI state commonly to the plurality of physical shared channel transmissions.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that one or a plurality of transmission/reception points (TRPs) (multi-TRP) schedule DL transmissions (for example, downlink shared channel (for example, PDSCH) transmissions)/UL transmissions (for example, uplink shared channel (for example, PUSCH) transmissions) to a terminal (user terminal, User Equipment (UE)) by using one or a plurality of panels (multi-panel).

For example, in NR, performing transmission/reception of a plurality of signals/channels (for example, multi-PDSCH) from one or a plurality of transmission/reception points is assumed. For example, it is conceivable to control scheduling of multi-PDSCH transmission/multi-PUSCH transmission by using one or a plurality of pieces of downlink control information (for example, DCI)/downlink control channels (for example, PDCCHs) from one or more transmission/reception points.

However, in NR specifications thus far, studies have not sufficiently been made on how to perform transmission control (for example, TCI state/QCL assumption and the like) in a case of scheduling a plurality of DL transmissions/UL transmissions from one or more TRPs.

In view of this, the present disclosure has one object to provide a terminal, a radio communication method, and a base station that allow communication to be appropriately performed even when a plurality of DL transmissions/UL transmissions are scheduled by one or more TRPs. Solution to Problem

A terminal according to an aspect of the present disclosure includes: a receiving section that receives downlink first information indicating scheduling of a plurality of physical shared channel transmissions and second information indicating a unified transmission configuration indicator (TCI); and a control section that performs, in a case that an update timing for a unified TCI state indicated by the second information is configured to be in a middle of a time period during when the plurality of physical shared channel transmissions are to be performed, control to apply a certain TCI state commonly to the plurality of physical shared channel transmissions.

### Advantageous Effects of Invention

An aspect of the present disclosure allows communication to be appropriately performed even when a plurality of DL transmissions/UL transmissions are scheduled by one or more TRPs.

### Brief Description of Drawings

[FIG. 1] FIGS. 1A and 1B are diagrams to show examples of unified/common TCI frameworks.
[FIG. 2] FIGS. 2A and 2B are diagrams to show examples of indication of joint/separate TCI states.
[FIG. 3] FIG. 3 is a diagram to show an example of a timing until application of a TCI state indicated.
[FIG. 4] FIG. 4 is a diagram to show an example of a case where an update timing for a TCI state indicated by DCI is configured to be in a middle of a transmission period of multi-PDSCH.
[FIG. 5] FIG. 5 is a diagram to show an example of a case where an update timing for a TCI state activated by a MAC CE is configured to be in a middle of a transmission period of multi-PDSCH.
[FIG. 6] FIG. 6 is a diagram to show an example of a TCI state to be applied/configured for multiple shared channels in a first embodiment.
[FIG. 7] FIG. 7 is a diagram to show an example of a TCI state to be applied/configured for multiple shared channels in a second embodiment.
[FIG. 8] FIG. 8 is a diagram to show another example of the TCI state to be applied/configured for the multiple shared channels in the second embodiment.
[FIG. 9] FIG. 9 is a diagram to show another example of the TCI state to be applied/configured for the multiple shared channels in the second embodiment.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.
[FIG. 14] FIG. 14 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have a different parameter(s) (or a parameter set(s)) that can be assumed to be the same, and such parameters (which may be referred to as QCL parameters) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

A QCL-type-A RS may be configured for a PDCCH and a PDSCH at all times and a QCL-type-D RS may be configured additionally. Doppler shift, a delay, or the like is difficult to be estimated by one-shot reception of a DMRS, and thus a QCL-type-A RS is used for enhancement in accuracy of channel estimation. A QCL-type-D RS is used for determination of a receive beam at a time of DMRS reception.

For example, TRSs 1-1, 1-2, 1-3, and 1-4 are transmitted and TRS 1-1 is notified, as a QCL-type-C/D RS, depending on a TCI state of a PDSCH. Notification of a TCI state allows a UE to use information obtained from a result of periodic reception/measurement of TRS 1-1 in the past for reception/channel estimation of a DMRS for a PDSCH. In this case, a QCL source for the PDSCH is TRS 1-1 and a QCL target is the DMRS for the PDSCH.

### (Default TCI State/Default Spatial Relation/Default PL-RS)

In Rel. 16, a PDSCH may be scheduled by DCI including a TCI field. A TCI state for a PDSCH is indicated by a TCI field. A TCI field in DCI format 1-1 has three bits and a TCI field in DCI format 1-2 has up to three bits.

In an RRC connected mode, if a first information element of TCI in DCI (higher layer parameter "tci-PresentInDCI") is set as "enabled" for a CORESET for scheduling a PDSCH, a UE assumes that a TCI field is present in DCI format 1_1 for a PDCCH to be transmitted in the CORESET.

If a second information element of TCI in DCI (higher layer parameter "tci-PresentInDCI-1-2") for a CORESET for scheduling a PDSCH is configured for a UE, the UE assumes that a TCI field having a DCI field size indicated by the second information element of TCI in DCI is present in DCI format 1_2 for a PDSCH to be transmitted in the CORESET.

In Rel. 16, a PDSCH may be scheduled by DCI including no TCI field. The DCI format of the DCI may be DCI format 1_0 or may be DCI format 1_1/1_2 of a case that no information element of TCI in DCI (higher layer parameter "tci-PresentInDCI" or "tci-PresentInDCI-1-2") is configured (enabled). In a case where a PDSCH is scheduled by DCI including no TCI field, if a time offset between reception of DL DCI (DCI for scheduling a PDSCH (scheduling DCI)) and the corresponding PDSCH (PDSCH scheduled by the DCI) is equal to or more than a threshold (timeDurationForQCL), a UE assumes that a TCI state or QCL assumption for the PDSCH is the same as a TCI state or QCL assumption (default TCI state) for a CORESET (for example, scheduling DCI).

In an RRC connected mode, in both a case where TCI information elements in DCI (higher layer parameters "tci-PresentInDCI" and "tci-PresentInDCI-1-2") are set as "enabled" and a case where no information element of TCI in DCI is configured, when a time offset between reception of DL DCI (DCI for scheduling a PDSCH) and the corresponding PDSCH (PDSCH scheduled by the DCI) is less than the threshold (timeDurationForQCL) (application condition, first condition), a TCI state (default TCI state) of the PDSCH may be a TCI state corresponding to the lowest CORESET ID in the latest slot in an active DL BWP in the CC (of a specific UL signal) if non-cross carrier scheduling is performed. Otherwise, the TCI state (default TCI state) of the PDSCH may be a TCI state corresponding to the lowest TCI state ID of a PDSCH in an active DL BWP in a CC to be scheduled.

In Rel. 15, separate MAC CEs, specifically, a MAC CE for activation/deactivation of a PUCCH spatial relation and a MAC CE for activation/deactivation of an SRS spatial relation, are needed. The PUSCH spatial relation follows the SRS spatial relation.

In Rel. 16, at least one of a MAC CE for activation/deactivation of a PUCCH spatial relation and a MAC CE for activation/deactivation of an SRS spatial relation need not necessarily be used.

If neither a spatial relation nor a PL-RS for a PUCCH is configured in FR2 (application condition, second condition), default assumptions of a spatial relation and a PL-RS (default spatial relation and default PL-RS) are used for the PUCCH. If neither a spatial relation nor a PL-RS for an SRS (SRS resource for the SRS or SRS resource corresponding to an SRI in DCI format 0_1 for scheduling a PUSCH) is configured in FR2 (application condition, second condition), the default assumptions of a spatial relation and a PL-RS (default spatial relation and default PL-RS) are used for the PUSCH scheduled by DCI format 0_1 and the SRS.

If a CORESET is configured in the active DL BWP in the CC (application condition), the default spatial relation and the default PL-RS may be the TCI state or the QCL assumption of the CORESET having the lowest CORESET ID in the active DL BWP. If no CORESET is configured in the active DL BWP in the CC, the default spatial relation and the default PL-RS may be the active TCI state having the lowest ID of the PDSCHs in the active DL BWP.

In Rel. 15, the spatial relation of a PUSCH scheduled in DCI format 0_0 follows the spatial relation of the PUCCH resource having the lowest PUCCH resource ID among active spatial relations of the PUCCHs in the same CC. Even when no PUCCH is transmitted in an SCell, a network need update all the PUCCH spatial relations in the SCell.

In Rel. 16, no PUCCH configuration for a PUSCH scheduled by DCI format 0_0 is needed. When no active PUCCH spatial relation is present or no PUCCH resource is present for a PUSCH scheduled by DCI format 0_0 in the active UL BWP in the CC (application condition, second condition), the default spatial relation and the default PL-RS are used for the PUSCH.

An application condition of a default spatial relation / default PL-RS for SRS may include an enable default beam pathloss for SRS information element (higher layer parameter enableDefaultBeamPlForSRS) is set as enabled. An application condition of a default spatial relation / default PL-RS for PUCCH may include an enable default beam pathloss for PUCCH information element (higher layer parameter enableDefaultBeamPlForPUCCH) is set as enabled. An application condition of a default spatial relation / default PL-RS for PUSCH scheduled by DCI format 0_0 may include an enable default beam pathloss for PUSCH scheduled by DCI format 0_0 information element (higher layer parameter enableDefaultBeamPlForPUSCH0_0) is set as enabled.

In Rel. 16, for a UE, when an RRC parameter (a parameter for enabling a default beam PL for a PUCCH (enableDefaultBeamPL-ForPUCCH), a parameter for enabling a default beam PL for a PUSCH (enableDefaultBeamPL-ForPUSCH0_0), or a parameter for enabling a default beam PL for an SRS (enableDefaultBeamPL-ForSRS)) is configured but no spatial relation nor PL-RS is configured, the UE applies a default spatial relation/PL-RS.

The threshold may be referred to as time duration for QCL, "timeDurationForQCL," "Threshold," "Threshold for offset between a DCI indicating a TCI state and a PDSCH scheduled by the DCI," "Threshold-Sched-Offset," "beamSwitchTiming," a schedule offset threshold, a scheduling offset threshold, or the like. The threshold may be reported by the UE as a UE capability (per subcarrier spacing).

In a case that an offset (scheduling offset) between reception of DL DCI and the corresponding PDSCH is less than the threshold "timeDurationForQCL," that at least one TCI state configured for a serving cell for the PDSCH scheduled includes "QCL type D," that two-default-TCI enable information element (enableTwoDefaultTCIStates-r16) is configured for the UE, and that at least one TCI codepoint (a codepoint of a TCI field in the DL DCI) indicates two TCI states, the UE assumes that a DMRS port for the PDSCH or PDSCH transmission occasion in the serving cell is quasi-co-located with an RS related to a QCL parameter associated with two TCI states corresponding to the lowest codepoint in TCI codepoints including two different TCI states (two-default-QCL-assumption determination rule). The two-default-TCI enable information element indicates that Rel-16 operation of two default TCI states for a PDSCH of a case that at least one TCI codepoint is mapped to two TCI states is enabled.

Specifications of, as default TCI states for a PDSCH in Rel. 15/16, a default TCI state for a single TRP, a default TCI state for multi-TRP based on multi-DCI, and a default TCI state for multi-TRP based on single DCI have been drafted.

Specifications of, as default TCI states for an aperiodic CSI-RS (A-CSI-RS) in Rel. 15/16, a default TCI state for a single TRP, a default TCI state for multi-TRP based on multi-DCI, and a default TCI state for multi-TRP based on single DCI have been drafted.

In Rel. 15/16, regarding each of a PUSCH/PUCCH/SRS specifications of a default spatial relation and a default PL-RS have been drafted.

### (Multi-TRP)

For NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (for example, TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be employed.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI, single PDCCH) (single master mode, multi-TRP based on single DCI (single-DCI based multi-TRP)). The plurality of PDSCHs from the multi-TRP may be separately scheduled by using a plurality of pieces of DCI (multi-DCI, multi-PDCCH (multiple PDCCHs)) (multi-master mode, multi-TRP based on multi-DCI (multi-DCI based multi-TRP)).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a channel with high quality is possible.

To support intra-cell (with the same cell ID) and inter-cell (with different cell IDs) multi-TRP transmission based on a plurality of PDCCHs, one control resource set (CORESET) in PDCCH configuration information (PDCCH-Config) may correspond to one TRP in RRC configuration information for linking a plurality of pairs of a PDCCH and a PDSCH with a plurality of TRPs.

When at least one of conditions 1 and 2 below is satisfied, the UE may determine that it is multi-TRP based on multi-DCI. In this case, a TRP may be interpreted as a CORESET pool index.

### {Condition 1}

One CORESET pool index is configured.

### {Condition 2}

Two different values (for example 0 and 1) of a CORESET pool index are configured.

When the following condition is satisfied, the UE may determine that it is multi-TRP based on single DCI. In this case, two TRPs may be interpreted as two TCI states indicated by a MAC CE/DCI.

### {Condition}

To indicate one or two TCI states for one codepoint of a TCI field in DCI, an "enhanced TCI states activation/deactivation for UE-specific PDSCH MAC CE" is used.

DCI for common beam indication may be a UE-specific DCI format (for example, DL DCI format (for example, 1_1, 1_2)), may be a UL DCI format (for example, 0_1, 0_2), or may be a UE-group common DCI format.

### (Unified/common TCI Framework)

With a unified TCI framework, UL and DL channels can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) to be applied to a channel/RS for UL and the number M (≥1) of TCI states (DL TCI states) to be applied to a channel/RS for DL may be defined. At least one of N and M may be notified/configured/indicated for the UE through higher layer signaling/physical layer signaling.

In the present disclosure, when N = M = X (X is any integer) is described, this may mean that X TCI states (corresponding to X TRPs) (joint TCI states) common to UL and DL are notified/configured/indicated for the UE. When N = X (X is any integer) and M = Y (Y is any integer and Y may be Y = X) are described, this may mean that X UL TCI states (corresponding to X TRPs) and Y DL TCI states (corresponding to Y TRPs) (i.e., separate TCI states) are notified/configured/indicated for the UE.

For example, when N = M = 1 is described, this may mean that one TCI state common to UL and DL for a single TRP is notified/configured/indicated for the UE (a joint TCI state for a single TRP) .

For example, when N = 1 and M = 1 are described, this may mean that one UL TCI state and one DL TCI state for a single TRP are separately notified/configured/indicated for the UE (separate TCI states for a single TRP).

For example, when N = M = 2 is described, this may mean that a plurality of (two) TCI states common to UL and DL for a plurality of (two) TRPs are notified/configured/indicated for the UE (joint TCI states for a plurality of TRPs).

For example, when N = 2 and M = 2 are described, this may mean that a plurality of (two) UL TCI states and a plurality of (two) DL TCI states for a plurality of (two) TRPs are notified/configured/indicated for the UE (separate TCI states for a plurality of TRPs).

Note that, in the example described above, a case is described where the value of each of N and M is one or two, but the value of each of N and M may be three or more and N may be different from M.

For Rel. 17, it is studied that N = M = 1 is supported. For Rel. 18 or later versions, it is studied that another case is supported.

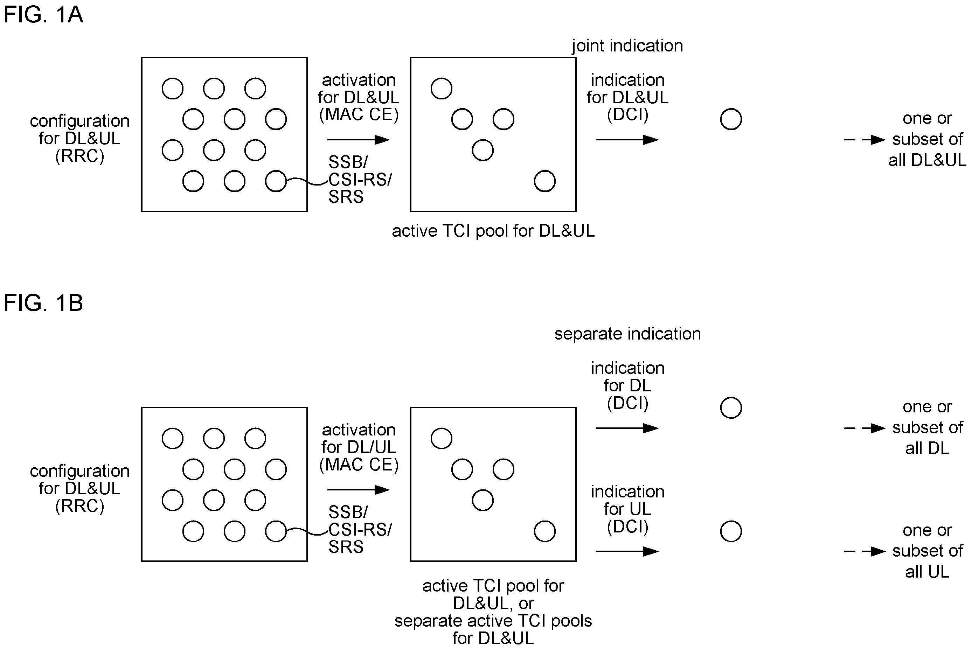

In an example in FIG. 1A, an RRC parameter (information element) configures a plurality of TCI states for both DL and UL. A MAC CE may activate a plurality of TCI states among the plurality of configured TCI states. DCI may indicate one of the plurality of activated TCI states. The DCI may be UL/DL DCI. The indicated TCI state (for example, unified TCI state) may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In an example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

Existing DCI format 1_1/1_2 may be used for indication of a common TCI state.

The DCI format indicating the TCI state may be a specific DCI format. For example, the specific DCI format may be DCI format 1_1/1_2 (defined in Rel. 15/16/17).

The DCI format (DCI format 1_1/1_2) indicating the TCI state may be a DCI format without DL assignment. In the present disclosure, a DCI format without DL assignment, a DCI format (DCI format 1_1/1_2) not scheduling any PDSCH, a DCI format (DCI format 1_1/1_2) not including one or more specific fields, a DCI format (DCI format 1_1/1_2) with one or more specific fields set equal to a fixed value, and the like may be interchangeably interpreted.

Regarding the DCI format without DL assignment (DCI format not including one or more specific fields), the specific fields may be fields other than a TCI field, a DCI format identifier field, a carrier indicator field, a bandwidth part (BWP) indicator field, a time domain resource assignment (TDRA) field, a Downlink Assignment Index (DAI) field (if configured), a transmit power control (Transmission Power Control (TPC)) command field (for a PUCCH to be scheduled), a PUCCH resource indicator field, and an indication of timing from a PDSCH to a HARQ-ACK feedback (PDSCH-to-HARQ feedback timing indicator) field (if present). The specific fields may be set as reserved fields or may be ignored.

Regarding the DCI format without DL assignment (DCI format with one or more specific fields set equal to a fixed value), the specific fields may be redundancy version (RV) fields, modulation and coding scheme (MCS) fields, a new data indicator field, and frequency domain resource assignment (FDRA) fields.

The RV fields may be all set equal to one. The MCS fields may be all set equal to one. The NDI field may be set equal to zero. Type 0 FDRA fields may be all set equal to zero. Type 1 FDRA fields may be all set equal to one. The FDRA fields for dynamic switch (higher layer parameter "dynamicSwitch") may be all set equal to zero.

A common TCI framework may include separate TCI states for DL and UL.

### (Method of Indicating TCI State)

For Rel. 17 or later versions, it is studied that one or more TCI states (common TCI states) are indicated, for a UE, by using a TCI state field (TCI field having up to three bits) included in a DCI format (for example, DCI format 1_1/1_2 without/with DL assignment).

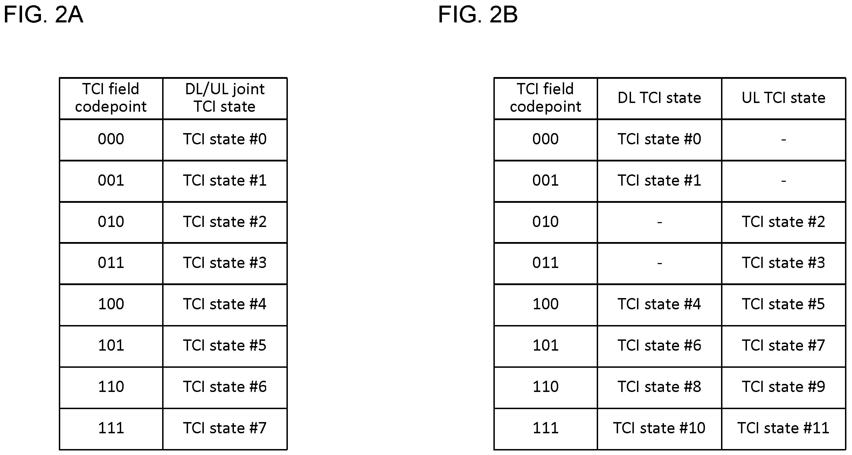

FIG. 2A is a diagram to show an example of indication of joint TCI state. As shown in FIG. 2A, in the indication of joint TCI state, one joint TCI state (DL/UL joint TCI state) may correspond to one TCI field codepoint. A UE may judge a TCI state (DL/UL joint TCI state) to be applied to a DL channel/signal and a UL channel/signal based on a TCI field codepoint indicated.

FIG. 2B is a diagram to show an example of indication of separate TCI state. As shown in FIG. 2B, in the indication of separate TCI state, one or two TCI states correspond to one TCI field codepoint. The two respective TCI states may be a DL (separate) TCI state and a UL (separate) TCI state. A UE judges a TCI state to be applied to a DL channel/signal and a TCI state to be applied to a UL channel/signal based on a TCI field codepoint indicated. When the UE receives notification of a TCI field codepoint (for example, a codepoint "000" in FIG. 2B) corresponding to only one TCI state, the UE may continue/indicate, with respect to the TCI state not indicated (for example, in the case of the codepoint "000" in FIG. 2B, the UL TCI state), the UL TCI state being applied until the notification.

### (beam application time (BAT))

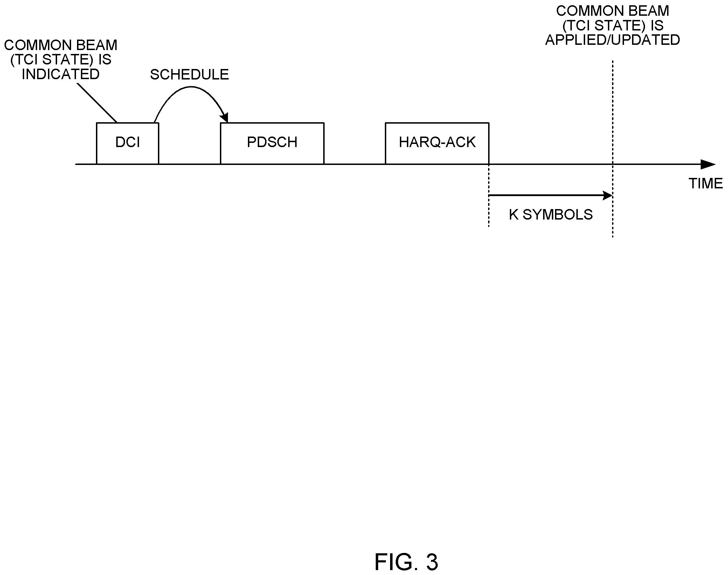

For Rel. 17 or later versions, a timeline is studied that is related to from indication of a TCI state (which may be referred to as "beam indication") to application of the TCI state such indicated. A timing of application of a TCI state (which may be referred to as "beam application timing (BAT)") after reception of the beam indication may be a timing after a specific time period (for example, after K symbols) from transmission of an HARQ-ACK for a PDSCH scheduled by DCI indicating the TCI state (see FIG. 3). The timing may be the first slot after at least the specific time period (for example, K symbols). In the present disclosure, a BAT, K symbols, Y symbols, and X[ms] may be interchangeably interpreted.

Such K may be determined on the basis of higher layer signaling (RRC parameter) based on capability information (UE Capability Information, for example, "timeDurationForQCL-rel18") reported by the UE. Note that a BAT for a specific subcarrier spacing may be configured for a plurality of (for example, all of) CCs/BWPs configured with a common TCI state ID of a common TCI state in carrier aggregation (CA).

Meanwhile, for Rel. 17 or later versions, it is assumed that a unified/common TCI framework is supported for multi-PDSCH/multi-PUSCH in a certain frequency range (for example, B52.6 (FR2-2)). In this case, a problem is how to configure QCL/TCI state (for example, default QCL/TCI state) for such multi-PDSCH/PUSCH.

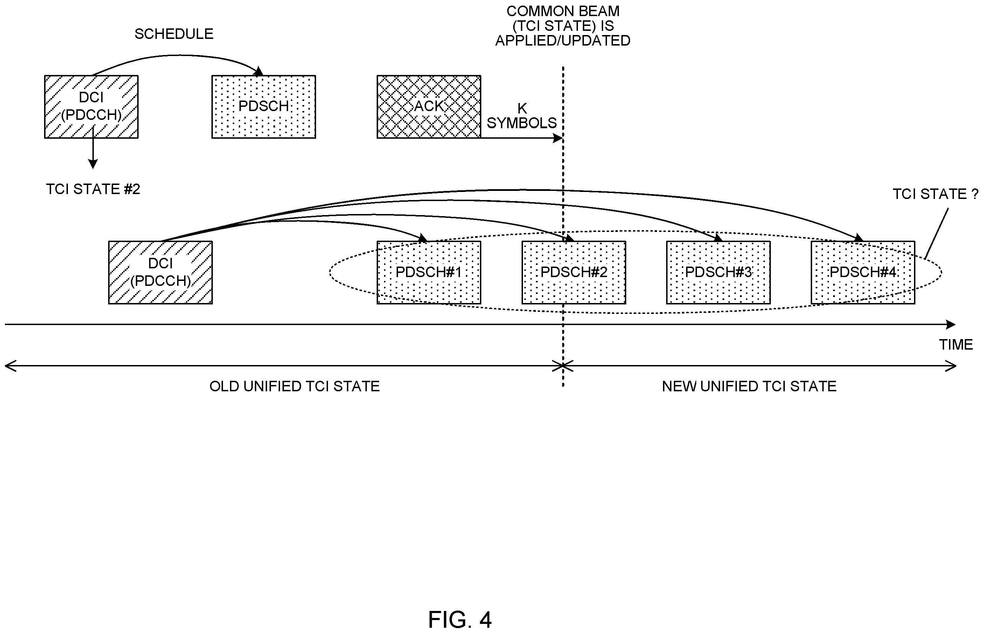

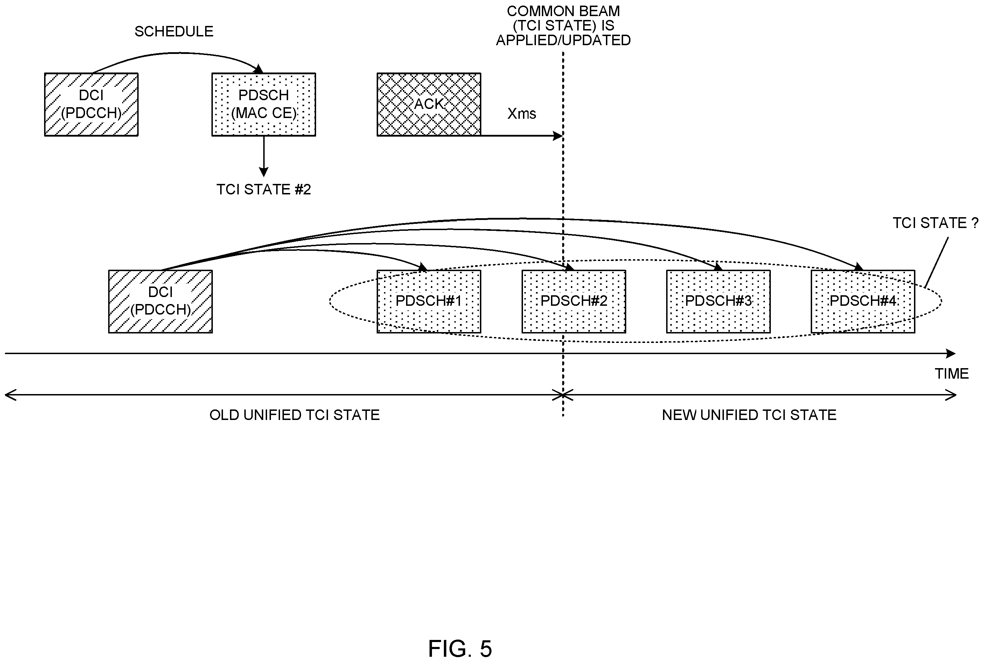

For example, a case is conceivable that a TCI state indicated is updated in a middle of transmission of multi-PDSCH/multi-PUSCH or that an update timing for the TCI state occurs in a middle of the transmission of the multi-PDSCH/multi-PUSCH (see FIGS. 4 and 5). In this case, a problem is how to control a beam (for example, at least one of a DL/UL TCI state, a UL TCI state, or a DL TCI state) to be applied to each PDSCH/each PUSCH.

FIG. 4 shows an example of a case where a plurality of TCI states are activated by a MAC CE and a unified TCI state is indicated by DCI. The DCI for indicating the unified TCI state may be referred to as beam indication DCI, and such DCI may be DCI including DL assignment/UL assignment (for example, UL grant) or may be DCI including no DL assignment/UL assignment.

Here, a case is shown where TCI state #2, as a common beam, is indicated by DCI used for scheduling of a PDSCH and multi-PDSCH (here, PDSCHs #1 to #4) is scheduled before and after a timing to update such TCI state #2. In this case, a problem is how to control a TCI state for such multi-PDSCH #1 to #4.

FIG. 5 shows an example of a case where one TCI state is activated by a MAC CE (for example, a case where the TCI state activated by the MAC CE corresponds to a TCI state indicated).

Here, a case is shown where TCI state #2, as a common beam, is activated by a MAC CE included in a PDSCH scheduled by DCI and multi-PDSCH (here, PDSCHs #1 to #4) is scheduled before and after a timing to update such TCI state #2. In this case, a problem is how to control a TCI state for such multi-PDSCH #1 to #4.

In view of this, the inventors of the present invention focused on a case where, when application of a unified TCI state is supported for multi-PDSCH transmission/multi-PUSCH transmission, an update timing for the TCI state occurs in a middle of the multi-PDSCH/PUSCH transmission, and studied how to configure/apply/judge QCL assumption/TCI state for such a case and came up with the idea of an aspect of the present embodiment.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, a sequence, a list, a set, a group, a cluster, a subset, and the like may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), an RRC message, and a configuration may be interchangeably interpreted.

The MAC signaling may use, for example, a MAC control element (MAC CE), a MAC Protocol Data Unit (PDU), or the like. In the present disclosure, a MAC CE, an update command, and an activation/deactivation command may be interchangeably interpreted.

The broadcast information may be, for example, a master information block (MIB), a system information block (SIB), minimum system information (Remaining Minimum System Information (RMSI), SIB1), other system information (OSI), or the like.

In the present disclosure, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state / QCL assumption, an RS of QCL type A in a TCI state / QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), a base station, an antenna port (for example, a demodulation reference signal (DMRS) port) of a certain signal, a DMRS, an antenna port group (for example, a DMRS port group) of a certain signal, a group for multiplexing (for example, a code division multiplexing (CDM) group, a reference signal group, a CORESET group), a Physical Uplink Control Channel (PUCCH) group, a PUCCH resource group, a resource (for example, a reference signal resource, an SRS resource), a resource set (for example, a reference signal resource set), a CORESET pool, a CORESET subset, a downlink Transmission Configuration Indication state (TCI state) (DL TCI state), an uplink TCI state (UL TCI state), a unified TCI state, a common TCI state, quasi-co-location (QCL), QCL assumption, a redundancy version (RV), and a layer (multi-input multi-output (MIMO) layer, transmission layer, spatial layer) may be interchangeably interpreted. A panel Identifier (ID) and a panel may be interchangeably interpreted. In the present disclosure, a TRP ID and a TRP may be interchangeably interpreted.

The panel may be related to at least one of a group index of an SSB/CSI-RS group, a group index of group-based beam report, and a group index of an SSB/CSI-RS group for group-based beam report.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one TCI field codepoint may be interchangeably interpreted.

In the present disclosure, it may be assumed that a single PDCCH (DCI) is supported when multi-TRP uses ideal backhaul. It may be assumed that multi-PDCCH (DCI) is supported when multi-TRP uses non-ideal backhaul.

Note that the ideal backhaul may be referred to as DMRS port group type 1, reference signal related group type 1, antenna port group type 1, CORESET pool type 1, and the like. The non-ideal backhaul may be referred to as DMRS port group type 2, reference signal related group type 2, antenna port group type 2, CORESET pool type 2, and the like. The name is not limited to this.

In the present disclosure, a single TRP, a single-TRP system, single-TRP transmission, and a single PDSCH may be interchangeably interpreted. In the present disclosure, multi-TRP (multiple TRPs), a multi-TRP system, multi-TRP transmission, and multi-PDSCH may be interchangeably interpreted. In the present disclosure, single DCI, a single PDCCH, multi-TRP based on single DCI, and two TCI states in at least one TCI codepoint being activated may be interchangeably interpreted.

In the present disclosure, a single TRP, a channel using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any TCI field codepoint being not mapped to two TCI states may be interchangeably interpreted.

In the present disclosure, multi-TRP, a channel using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, TRP #1 (first TRP) may correspond to CORESET pool index = 0 or may correspond to the first TCI state of two TCI states corresponding to one TCI field codepoint. TRP #2 (second TRP) TRP #1 (first TRP) may correspond to CORESET pool index = 1 or may correspond to the second TCI state of two TCI states corresponding to one TCI field codepoint.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

QCL in the present disclosure may be interchangeably interpreted as QCL type D.

In the present disclosure, "TCI state A is of the same QCL type D as that of TCI state B," "TCI state A and TCI state B are the same," "TCI state A is QCL type D with TCI state B," and the like may be interchangeably interpreted.

In the present disclosure, single-DCI-based multi-TRP repetition may be NCJT in an enhanced mobile broadband (eMBB) service (low priority, priority 0), or may be repetition in a URLLC service of an ultra-reliable and low latency communications service (high priority, priority 1).

In embodiments of the present disclosure, a PDSCH for a plurality of TRPs based on single DCI may be interchangeably interpreted as a PDSCH applied with TDM/FDM/SDM for a plurality of TRPs (defined in Rel. 16) .

In embodiments of the present disclosure, a PDSCH for a plurality of TRPs may be interchangeably interpreted as a PDSCH applied with TDM/FDM/SDM for a plurality of TRPs based on single DCI (defined in Rel. 16) .

In embodiments of the present disclosure, a PUSCH/PUCCH/PDCCH for a plurality of TRPs based on single DCI may be interchangeably interpreted as repetition transmission (repetition) of a PUSCH/PUCCH/PDCCH for a plurality of TRPs (defined in Rel. 17 or later versions).

In embodiments of the present disclosure, utilization of a plurality of TRPs based on multi-DCI being configured may mean that CORESET pool index = 1 is configured. Utilization of a plurality of TRPs based on multi-DCI being configured may mean that CORESET pool indices of two different values (for example, 0 and 1) are configured.

In embodiments of the present disclosure, a UL transmission using a plurality of panels may mean a UL transmission scheme using a plurality of panels of a UE by DCI enhancement.

In embodiments of the present disclosure, if a joint TCI state/separate TCI state in a unified TCI state framework is not applicable to channels/signals, the default TCI state/QCL/spatial relation described above may be used for determination of a TCI state/QCL/spatial relation of the channels.

In the following, each embodiment of the present disclosure may be applied to transmission/reception of any channel/signal being a target of application of the unified TCI state framework defined in Rel. 17 or later versions described above.

In the present disclosure, a TCI state being applied to channels/signals/resources may mean that the TCI state is applied to transmission/reception of the channels/signals/resources.

In the present disclosure, "small," "less," "short," and "low" may be interchangeably interpreted. In the present disclosure, "ignore," "drop," and the like may be interchangeably interpreted.

In the present disclosure, "highest (maximum)" and "lowest (minimum)" may be interchangeably interpreted. In the present disclosure, "maximum" may be interchangeably interpreted as "the n-th (n is any natural number)" largest, larger, higher, or the like. In the present disclosure, "minimum" may be interchangeably interpreted as "the n-th (n is any natural number)" smallest, smaller, lower, or the like.

In the present disclosure, reception, repetition transmission, and repetition reception may be interchangeably interpreted.

In the present disclosure, a channel, a signal, and a channel/signal may be interchangeably interpreted. In the present disclosure, a DL channel, a DL signal, a DL signal/channel, transmission/reception of a DL signal/channel, a DL reception, and a DL transmission may be interchangeably interpreted. In the present disclosure, a UL channel, a UL signal, a UL signal/channel, transmission/reception of a UL signal/channel, a UL reception, and a UL transmission may be interchangeably interpreted.

In the present disclosure, a first TCI state may correspond to the first TRP. In the present disclosure, a second TCI state may correspond to the second TRP. In the present disclosure, an n-th TCI state may correspond to the n-th TRP.

In the present disclosure, a first CORESET pool index value (for example, 0), a first TRP index value (for example, 1), and the first TCI state (first DL/UL (joint/separate) TCI state) may correspond to each other. In the present disclosure, a second CORESET pool index value (for example, 1), a second TRP index value (for example, 2), and the second TCI state (second DL/UL (joint/separate) TCI state) may correspond to each other.

### (Radio Communication Method)

In the following, description is made taking a case where a TCI state is updated by DCI/MAC CE or the like as an example, but the present embodiment is not limited to this. For example, also for a TCI state list (or TCI state pool) configured by a higher layer parameter or the like, and for an active TCI state (or active TCI state list) activated by a MAC CE, when the TCI state list or the active TCI state is updated in a middle of multiple physical shared channel transmissions, the contents of the embodiment described below may be applied.

In the following, description is made taking repetition transmission of a physical shared channel (for example, PDSCH/PUSCH) (or multi-PDSCH/multi-PUSCH) as an example, but the present embodiment may be applied to repetition transmission of another channel/reference signal (for example, multi-PDCCH, multi-PUCCH, or the like).

In the following, description is made taking a unified TCI state as an example of a TCI state indicated from a network (for example, base station) to a UE, but the present embodiment is not limited to this. The present embodiment may be applied to a TCI state other than a unified TCI state (for example, TCI state supported in Rel. 15/16), a spatial relation, or SRI indication.

In the following description, a TCI state indicated from a network (for example, base station) to a UE may be indicated/activated/configured by DCI/MAC CE/RRC. The DCI indicating a TCI state may be DCI for scheduling multi-PDSCH/multi-PUSCH or may be other DCI.

### <First Embodiment>

A first embodiment describes a case where, when an update timing for a TCI state is configured to be in a middle of a time period during when a plurality of physical shared channels (hereinafter, also referred to as shared channels) are to be transmitted, a certain TCI state is applied/configured commonly to the plurality of shared channels.

The plurality of shared channels may be at least one of multi-PDSCH transmission and multi-PUSCH transmission. The multi-PDSCH transmission/multi-PUSCH transmission may be scheduled/activated by single DCI or may be scheduled/activated by multi-DCI. Information related to the TCI state to be updated may be notified by DCI/MAC CE/RRC. The TCI state may be a unified TCI state. The unified TCI state may be interpreted as a joint TCI state/separate TCI state.

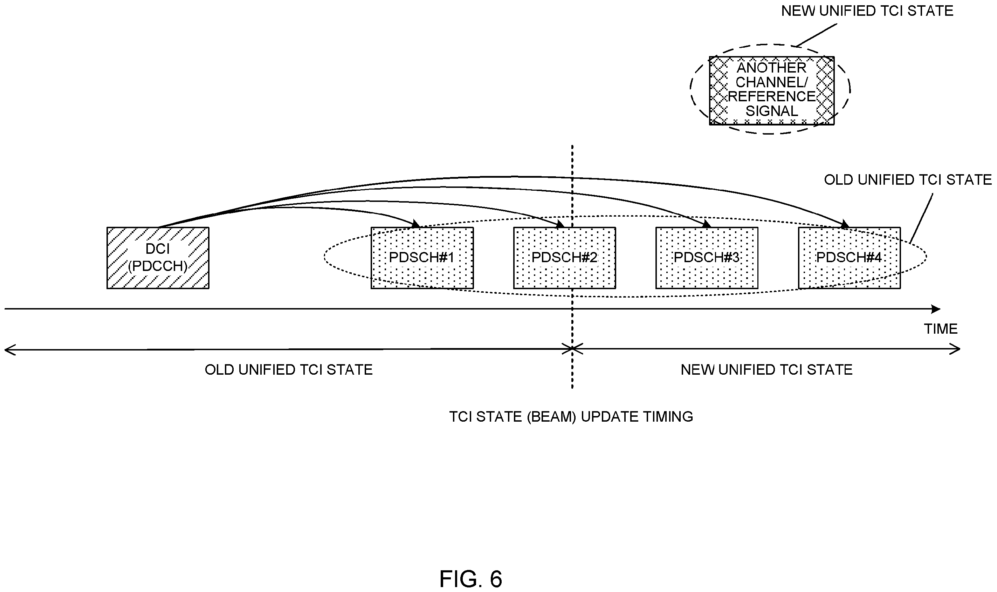

FIG. 6 shows a case where a plurality of shared channels (here, multi-PDSCH #1 to #4) are scheduled by the same DCI and an update timing for a unified TCI state is configured to be in a middle (here, between a transmission start timing for PDSCH #2 and a transmission start timing for PDSCH #3) of a time period during when such multi-PDSCH #1 to #4 is to be transmitted. Here, a case where the PDSCHs are scheduled is shown, but the PDSCHs may be replaced with PUSCHs.

A UE receives first information (for example, DCI) for scheduling the multi-PDSCH and second information (for example, DCI/MAC CE) indicating a TCI state. When the update timing for the TCI state such indicated is configured to be in a middle of a multi-PDSCH transmission period, the UE may apply a certain TCI state commonly to the multi-PDSCH #1 to #4.

FIG. 6 shows a case where the certain TCI state to be applied to each of the PDSCHs #1 to #4 is a TCI state applied to the first PDSCH (here, PDSCH #1) of the multi-PDSCH (or a TCI state indicated corresponding to first PDSCH #1). In other words, even in a time period after the update timing for the TCI state, the UE assumes/applies, for multi-PDSCH (for example, PDSCH #3 and #4), a TCI state (for example, old unified TCI state) of before the update timing. In the present disclosure, the old unified TCI state (or old TCI state) may be a TCI state indicated/activated by DCI/MAC CE before the update timing, or may be a TCI state (for example, default TCI state) determined with a certain rule.

On the other hand, for other channels/reference signals in the time period after the update timing for the TCI state, the UE may assume/apply a TCI state updated.

The certain TCI state applied commonly to multiple shared channels is not limited to of the first shared channel of the multiple shared channels but may be of another shared channel. For example, the certain TCI state may be a TCI state applied to the last shared channel/certain number-th shared channel (or a TCI state indicated corresponding to the last shared channel/certain number-th shared channel). Alternatively, the certain TCI state may be a TCI state applied to a shared channel of the first/last/certain number-th symbol or the first/last/certain number-th slot. The certain TCI state may be defined in a specification or may be configured for a UE from a base station by a higher layer parameter.

As described above, for multi-PDSCH/multi-PUSCH transmission, an identical TCI state is assumed/applied/configured regardless of an update timing for a TCI state, so that UE operation can be simplified.

In a case of applying the first embodiment, an update timing for a beam (or TCI state) of multi-PDSCH/multi-PUSCH and an update timing for a beam of the other channels/reference signals may be applied separately (for example, a difference between the beam update timings may occur). In FIG. 6, the TCI state (for example, old unified TCI state) of before the beam update timing may be applied to PDSCH #3/#4, and the TCI state updated (for example, new unified TCI state) may be applied to another channel/reference signal.

In this case, in the same time domain (for example, identical symbol), when different unified TCI states are assumed/applied/configured for multiple shared channels (for example, PDSCH #3/#4 in FIG. 6) and another channel/reference signal, the UE may perform transmission/reception processing with priority to either one of the TCI states.

For example, the UE may perform control to transmit/receive only a channel/reference signal with high priority and may perform control not to transmit/receive (for example, drop) another channel/reference signal with low priority. Alternatively, the UE may perform control to transmit/receive both the channel/reference signal with high priority and the channel/reference signal with low priority based on a TCI state corresponding to the channel/reference signal with high priority.

The priority corresponding to channels/reference signals may be determined based on a certain rule or may be configured for a UE from a base station by using a higher layer parameter. The certain rule may be at least one of a kind/type of a channel, a start or end timing for a channel/reference signal, a start or end timing to trigger/schedule a channel/reference signal, and a frequency domain to which each channel/reference signal is allocated.

For example, the priority may be determined (for example, another channel/reference signal may be prioritized), based on whether multi-PDSCH/PUSCH is used or another channel/reference signal is used. Alternatively, the priority may be determined (for example, an earlier start symbol may be prioritized), based on an index of a start symbol/end symbol of a channel/reference signal. Alternatively, the priority may be determined (for example, a later end symbol of DCI may be prioritized), based on a start/end symbol index of DCI for triggering/scheduling a channel/RS. Alternatively, the priority may be determined (for example, a smaller CC index may be prioritized), based on a frequency index (PRB/CC) to which a channel/RS is allocated.

As described above, when multi-PDSCH/PUSCH and another channel/reference signal to which different TCI states correspond overlap with each other in the same time domain, transmission/reception of either the multi-PDSCH/PUSCH or the channel/reference signal may be prioritized. With this, although a UE not having a UE capability of simultaneous reception of different beams (or having not reported such a UE capability) does not support reception of channels/reference signals of different beams (for example, QCL type D) in the same symbol, communication processing in such a UE can be performed appropriately.

Note that, in FIG. 6, for the multi-PDSCH (here, PDSCHs #1 to #4), the same TCI state (or one TCI state) may be indicated or different TCI states (for example, two TCI states) may be indicated. The different TCI states may correspond to different CORESET pool indices or may correspond to the same CORESET pool index.

When different TCI states (for example, a first TCI state and a second TCI state) are indicated, the first TCI state may correspond to a part of the PDSCHs (for example, PDSCH #1/#3 (for example, cyclic mapping), or PDSCHs #1 and #2 (for example, sequential mapping)) and the second TCI state may correspond to other PDSCH(s) (for example, PDSCH #2/#4, or PDSCHs #3 and #4).

The update timing to the first TCI state may be the same as the update timing to the second TCI state. Alternatively, the update timing to the first TCI state and the update timing to the second TCI state may be configured to be different from each other.

For a part of the PDSCHs, before and after the update timing to the first TCI state (or regardless of the update timing), a common TCI state (for example, an old first TCI state) may be applied. For other PDSCH(s), before and after the update timing to the second TCI state (or regardless of the update timing), a common TCI state (for example, an old second TCI state) may be applied.

### <Second Embodiment>

A second embodiment describes a case where, when an update timing for a TCI state is configured to be in a middle of a time period during when a plurality of shared channels are to be transmitted, TCI states of the respective shared channels are applied/configured separately based on the update timing for the TCI state/transmission timings for the respective shared channels.

The plurality of shared channels may be at least one of multi-PDSCH transmission and multi-PUSCH transmission. The multi-PDSCH transmission/multi-PUSCH transmission may be scheduled/activated by single DCI or may be scheduled/activated by multi-DCI. Information related to the TCI state to be updated may be notified by DCI/MAC CE/RRC. The TCI state may be a unified TCI state.

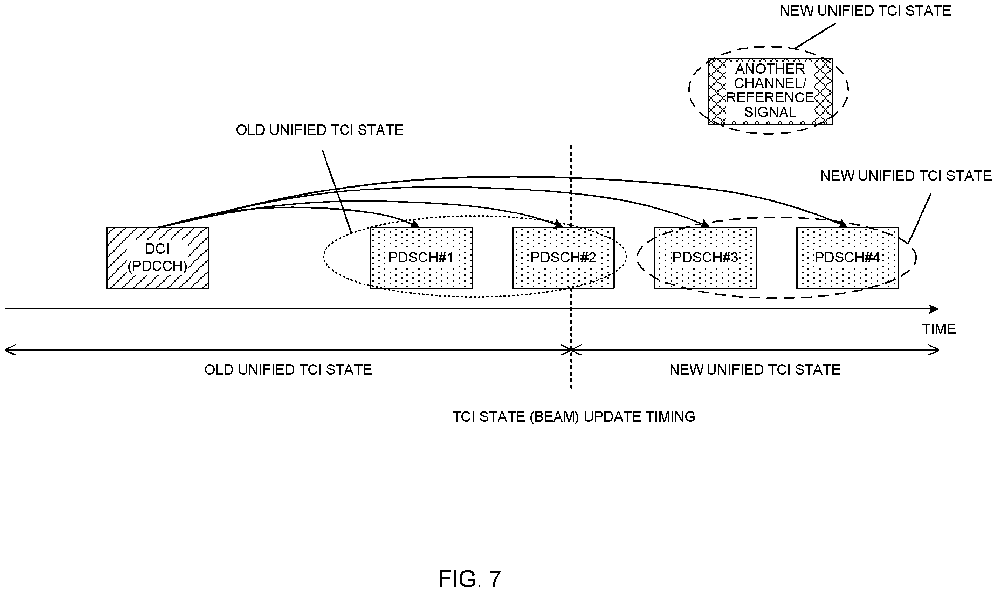

FIG. 7 shows a case where a plurality of shared channels (here, multi-PDSCH #1 to #4) are scheduled by the same DCI and an update timing for a unified TCI state is configured to be in a middle (here, between a transmission start timing for PDSCH #2 and a transmission start timing for PDSCH #3) of a time period during when such multi-PDSCH #1 to #4 is to be transmitted. Here, a case where the PDSCHs are scheduled is shown, but the PDSCHs may be replaced with PUSCHs.

A UE receives first information (for example, DCI) for scheduling the multi-PDSCH and second information (for example, DCI/MAC CE) indicating a TCI state. When the update timing for the TCI state such indicated is configured to be in a middle of a multi-PDSCH transmission period, the UE may judge, with respect to the multi-PDSCH #1 to #4, respective TCI states assumed/applied for the PDSCHs #1 to #4 based on the update timing for the TCI state. The respective TCI states assumed/applied for the PDSCHs #1 to #4 may be respective TCI states (for example, indicated TCI states) applied at time points of reception of the PDSCHs (at time points of transmission in a case of PUSCHs).

The respective TCI states applied at the time points of reception of the PDSCHs (at the time points of transmission in a case of PUSCHs) may be TCI states corresponding to respective first/last/certain number-th symbols (or slots) in the PDSCHs. FIG. 7 shows a case where the TCI states are TCI states corresponding to respective first symbols (for example, start symbols) in the PDSCHs.

In other words, for PDSCHs #1 and #2 with the start symbols scheduled before the update timing for the TCI state, the UE applies a TCI state (for example, old unified TCI state) of before the update. In the present disclosure, the old unified TCI state (or old TCI state) may be a TCI state indicated/activated by DCI/MAC CE before the update timing, or may be a TCI state (for example, default TCI state) determined with a certain rule.

On the other hand, for PDSCHs #3 and #4 with the start symbols scheduled after the update timing for the TCI state, the UE applies a TCI state (for example, new unified TCI state) of after the update. After the timing for the TCI state, for multi-PDSCH (here, PDSCHs #3 and #4) and another channel/reference signal, the UE may assume/apply the same TCI state (for example, new unified TCI state).

As described above, for multi-PDSCH/multi-PUSCH transmission, respective TCI states of the PDSCHs/PUSCHs are assumed/applied/configured separately based on an update timing for a TCI state, so that beam update timings for the multi-PDSCH/multi-PUSCH and another channel/reference signal can be unified. This allows TCI state/beam control for a plurality of types of channels/reference signals to be simplified in a UE/base station.

As described above, in a case of applying the second embodiment, an update timing for a beam (or TCI state) of multi-PDSCH/multi-PUSCH and an update timing for a beam of another channel/reference signal may be applied commonly. FIG. 7 shows a case where, for PDSCH #3/#4 and another channel/reference signal, the same update timing for the TCI state is applied.

Note that a case is also conceivable that there is no sufficient time (for example, guard period) between the last PDSCH (PDSCH #2 in FIG. 7) before the update timing of the TCI state and the first PDSCH (PDSCH #3 in FIG. 7) after the update timing of the TCI state. In this case, it is also conceivable that switching of a receive beam (for example, switching of a spatial filter to be used for PDSCH reception/PUSCH transmission) in a UE may be not performed in time for reception of PDSCH #3 (for example, reception of a start symbol of PDSCH #3) .

Thus, when respective TCI states of the PDSCHs/PUSCHs are controlled separately based on the update timing for the TCI state in multi-PDSCH/multi-PUSCH, at least one of Option 2-1 and Option 2-2 as below may be applied.

### {Option 2-1}

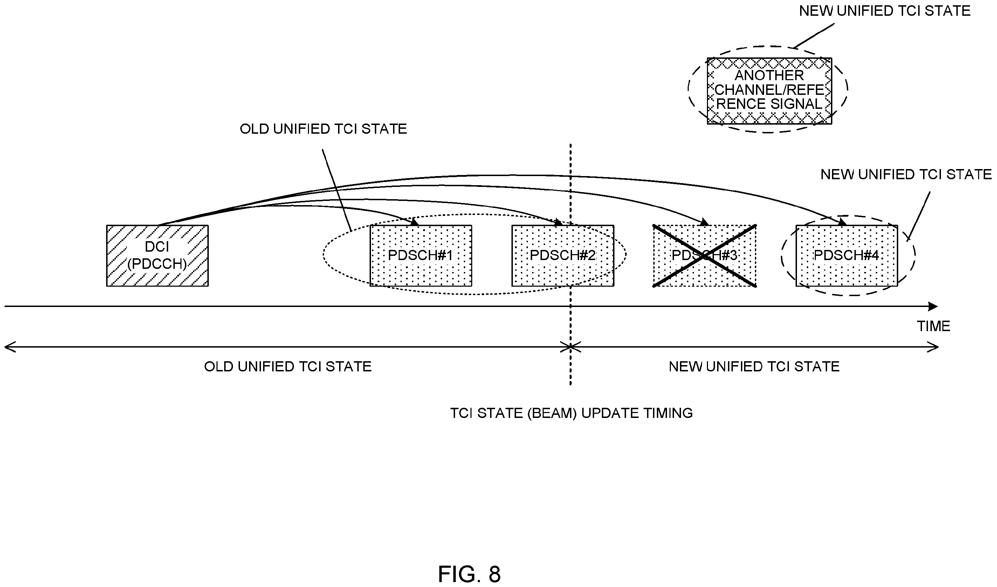

Control may be performed such that transmission of the first shared channel after the update timing for the TCI state (or beam update timing) is not to be performed (see FIG. 8). For example, when the update timing for the TCI state is configured to be in a middle of a transmission period of the multi-PDSCH, the UE may not need to assume that the first PDSCH (for example, PDSCH #3 in FIG. 8) after the update timing for the TCI state is to be transmitted. Alternatively, the UE may perform control not to perform reception of the first PDSCH (for example, PDSCH #3 in FIG. 8) after the update timing of the TCI state (or control to skip reception processing of such PDSCH #3).

When the update timing for the TCI state is configured to be in a middle of a transmission period of the multi-PUSCH, the UE may perform control not to perform transmission of the first PUSCH after the update timing for the TCI state (or control to skip transmission processing of such a PUSCH).

### {Option 2-2}

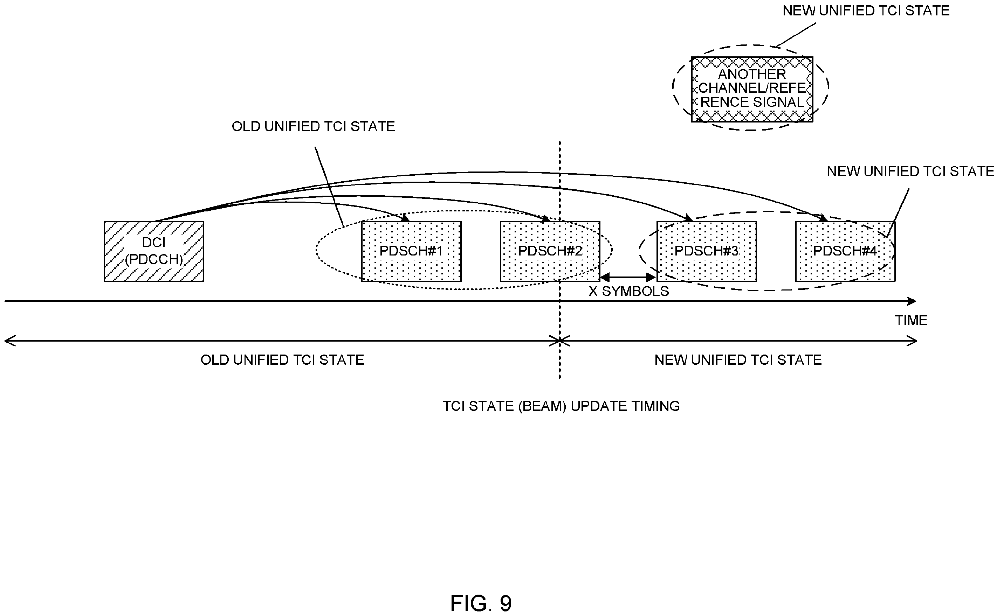

A certain time period (for example, guard period/gap/time offset x) may be configured between the last shared channel before the update timing for the TCI state (or beam update timing) and the first shared channel after the update timing for the TCI state (see FIG. 9). For example, when the update timing for the TCI state is configured to be in a middle of a transmission period of the multi-PDSCH, the UE may assume that the first PDSCH (for example, PDSCH #3 in FIG. 9) after the update timing for the TCI state is scheduled after at least a certain number of symbols from the last PDSCH (for example, PDSCH #2 in FIG. 9) before the update timing for the TCI state.

For example, a guard period/gap/time offset of at least x symbols may be configured between the last symbol of the last PDSCH #2 before the update timing for the TCI state and the start symbol of the first PDSCH #3 after the update timing for the TCI state. x may be defined in a specification (for example, x = 1) or may be configured for a UE from a base station by using a higher layer parameter. Regarding the value of x (regarding a time required for switching of a beam/TCI state), a terminal may report the capability of the terminal.

Option 2-1/Option 2-2 may be applied/supported only for a specific subcarrier spacing (SCS). The specific SCS may be, for example, an SCS of a certain value or more (for example, 480 kHz/960 kHz).

Option 2-1 and Option 2-2 may be combined for application. For example, when scheduling is made such that a time period of at least x symbols is configured between the last symbol of the last PDSCH before the update timing for the TCI state and the start symbol of the first PDSCH after the update timing for the TCI state, the UE assumes that the first PDSCH after the update timing is to be transmitted (or performs reception of the first PDSCH after the update timing). Otherwise, the UE does not assume that the first PDSCH after the update timing is to be transmitted (or does not perform/skips reception of the first PDSCH after the update timing).

Note that, in FIGS. 7 to 9, for the multi-PDSCH (here, PDSCHs #1 to #4), the same TCI state (or one TCI state) may be indicated or different TCI states (for example, two TCI states) may be indicated. The different TCI states may correspond to different CORESET pool indices or may correspond to the same CORESET pool index.

When different TCI states (for example, a first TCI state and a second TCI state) are indicated, the first TCI state may correspond to a part of the PDSCHs (for example, PDSCH #1/#3 (for example, cyclic mapping), or PDSCHs #1 and #2 (for example, sequential mapping)) and the second TCI state may correspond to other PDSCH(s) (for example, PDSCH #2/#4, or PDSCHs #3 and #4).

The update timing to the first TCI state may be the same as the update timing to the second TCI state. Alternatively, the update timing to the first TCI state and the update timing to the second TCI state may be configured to be different from each other.

When the update timing to the first TCI state is the same as the update timing to the second TCI state, it is sufficient that the UE controls respective updates to the first TCI state and the second TCI state based on the update timing.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

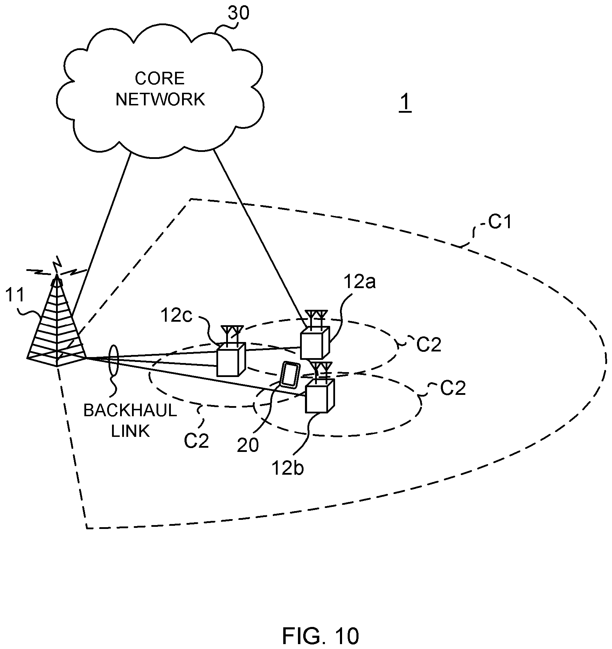

FIG. 10 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

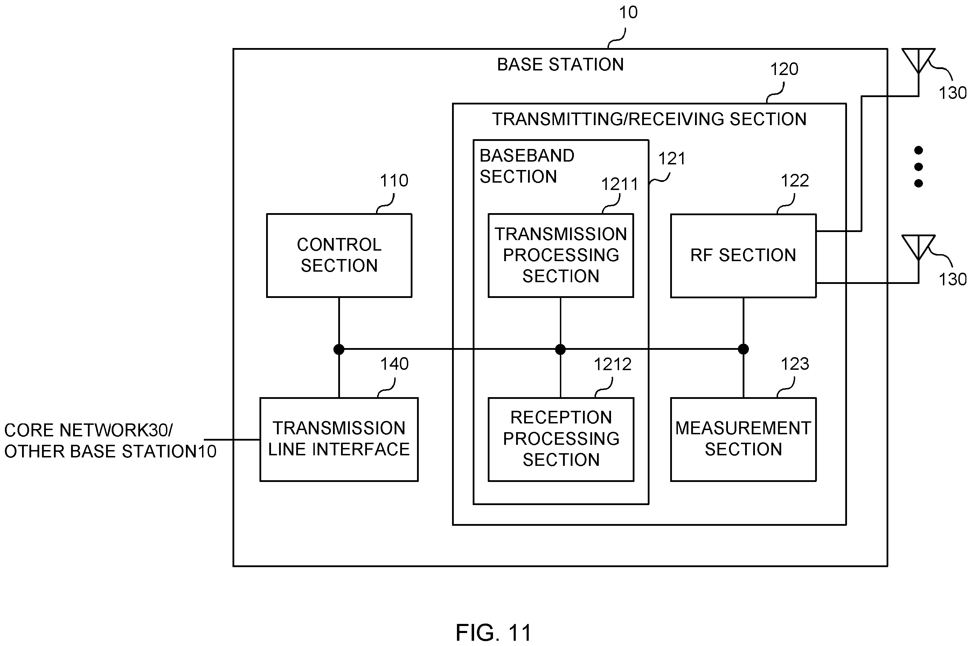

FIG. 11 is a diagram to show an example of a structure of the base station according to one embodiment. The base station 10 includes a control section 110, a transmitting/receiving section 120, transmitting/receiving antennas 130 and a transmission line interface (transmission line interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit downlink first information indicating scheduling of a plurality of physical shared channel transmissions and second information indicating a unified transmission configuration indicator (TCI).

In a case that an update timing for a unified TCI state indicated by the second information is configured to be in a middle of a time period during when the plurality of physical shared channel transmissions are to be performed, the control section 110 may perform control to apply a certain TCI state commonly to the plurality of physical shared channel transmissions.

Alternatively, in the case that an update timing for a unified TCI state indicated by the second information is configured to be in a middle of a time period during when the plurality of physical shared channel transmissions are to be performed, the control section 110 may separately control respective TCI states to be applied to the physical shared channel transmissions based on the update timing for the unified TCI state and respective timings for the physical shared channel transmissions.

### (User Terminal)

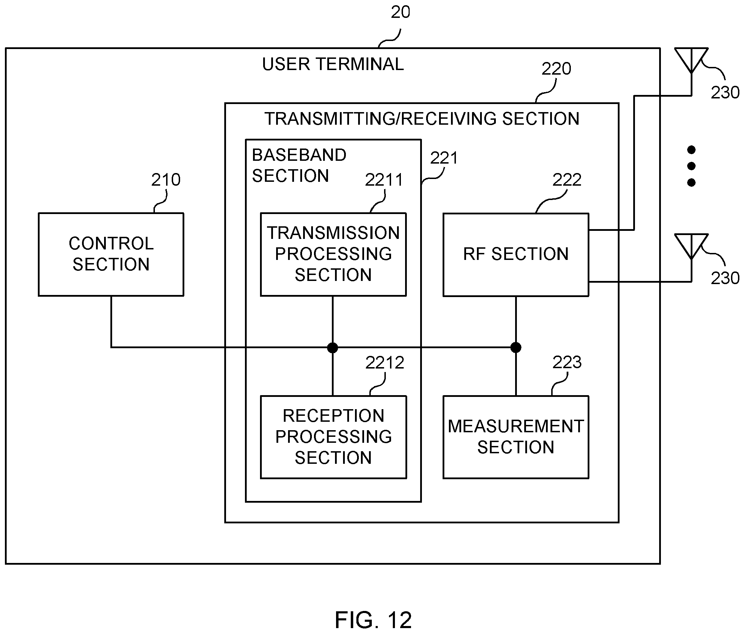

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive downlink first information indicating scheduling of a plurality of physical shared channel transmissions and second information indicating a unified transmission configuration indicator (TCI).

In a case that an update timing for a unified TCI state indicated by the second information is configured to be in a middle of a time period during when the plurality of physical shared channel transmissions are to be performed, the control section 210 may perform control to apply a certain TCI state commonly to the plurality of physical shared channel transmissions. The certain TCI state may be a TCI state applied to a specific physical shared channel transmission of the plurality of physical shared channel transmissions.

Alternatively, in the case that an update timing for a unified TCI state indicated by the second information is configured to be in a middle of a time period during when the plurality of physical shared channel transmissions are to be performed, the control section 210 may separately control respective TCI states to be applied to the physical shared channel transmissions based on the update timing for the unified TCI state and respective timings for the physical shared channel transmissions.

The control section 210 may assume that the control section 210 performs control not to perform transmission processing or reception processing with respect to a first physical shared channel transmission after the update timing for the unified TCI state, of the plurality of physical shared channel transmissions, or that a certain time period (for example, gap/guard period/offset) is provided between a last physical shared channel transmission before the update timing for the unified TCI state and the first physical shared channel transmission after the update timing for the unified TCI state.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

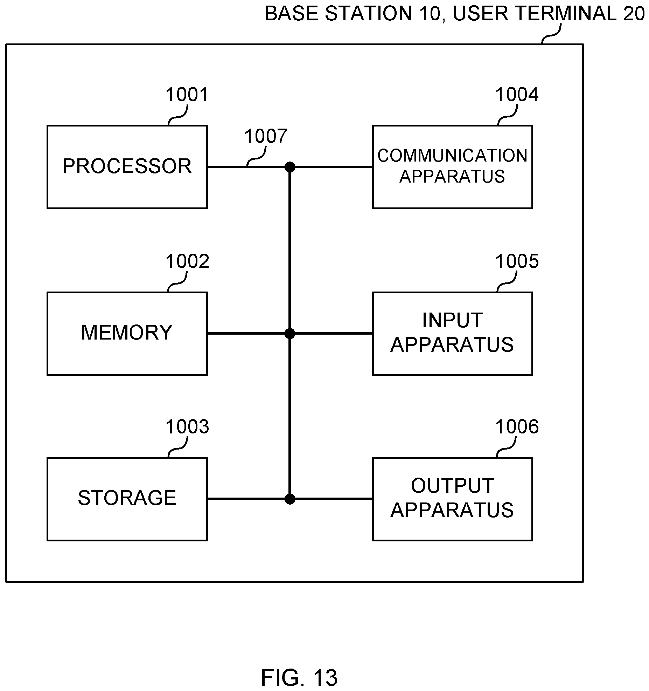

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filtering processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "X holds") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms such as a "mobile station (MS)," a "user terminal," a "user equipment (UE)," and a "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

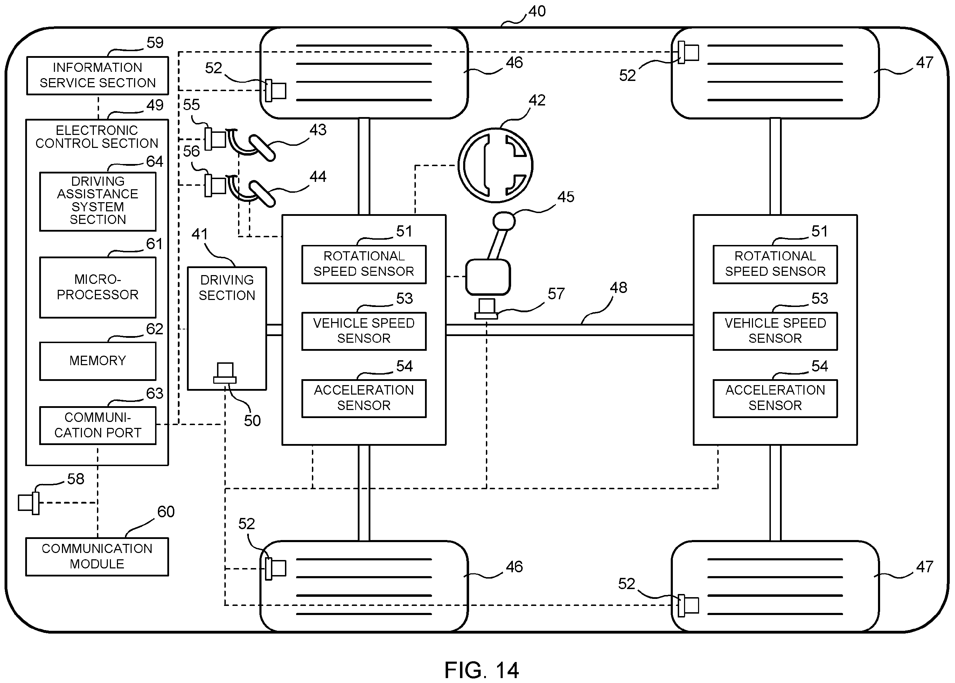

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, the above-describe base station 10 or user terminal 20 or the like (may function as the base station 10 or user terminal 20 or the like).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of operations. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some operation.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2022-004894 filed on January 17, 2022, the entire contents of which are incorporated herein by reference.

## Claims

1. A terminal comprising:
a receiving section that receives downlink first information indicating scheduling of a plurality of physical shared channel transmissions and second information indicating a unified transmission configuration indicator (TCI); and
a control section that performs, in a case that an update timing for a unified TCI state indicated by the second information is configured to be in a middle of a time period during when the plurality of physical shared channel transmissions are to be performed, control to apply a certain TCI state commonly to the plurality of physical shared channel transmissions.

2. The terminal according to claim 1, wherein
the certain TCI state is a TCI state applied to a specific physical shared channel transmission of the plurality of physical shared channel transmissions.

3. A terminal comprising:
a receiving section that receives downlink first information indicating scheduling of a plurality of physical shared channel transmissions and second information indicating a unified transmission configuration indicator (TCI); and
a control section that separately controls, in a case that an update timing for a unified TCI state indicated by the second information is configured to be in a middle of a time period during when the plurality of physical shared channel transmissions are to be performed, respective TCI states to be applied to the plurality of physical shared channel transmissions based on the update timing for the unified TCI state and respective timings for the plurality of physical shared channel transmissions.

4. The terminal according to claim 3, wherein
the control section assumes that the control section performs control not to perform transmission processing or reception processing with respect to a first physical shared channel transmission after the update timing for the unified TCI state, of the plurality of physical shared channel transmissions, or that a certain time period is provided between a last physical shared channel transmission before the update timing for the unified TCI state and the first physical shared channel transmission after the update timing for the unified TCI state.

5. A radio communication method for a terminal, the radio communication method comprising:
receiving downlink first information indicating scheduling of a plurality of physical shared channel transmissions and second information indicating a unified transmission configuration indicator (TCI); and
performing, in a case that an update timing for a unified TCI state indicated by the second information is configured to be in a middle of a time period during when the plurality of physical shared channel transmissions are to be performed, control to apply a certain TCI state commonly to the plurality of physical shared channel transmissions.

6. A base station comprising:
a transmitting section that transmits downlink first information indicating scheduling of a plurality of physical shared channel transmissions and second information indicating a unified transmission configuration indicator (TCI); and
a control section that performs, in a case that an update timing for a unified TCI state indicated by the second information is configured to be in a middle of a time period during when the plurality of physical shared channel transmissions are to be performed, control to apply a certain TCI state commonly to the plurality of physical shared channel transmissions.
